(19) Europäisches Patentamt

European Patent Office

Office européen des brevets

(11) **EP 3 926 523 A1**

(12) **EUROPEAN PATENT APPLICATION**

(43) Date of publication:
**22.12.2021 Bulletin 2021/51**

(51) Int Cl.:
***G06K 9/00*** *(2006.01)*

(21) Application number: **20181244.3**

(22) Date of filing: **19.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **TOYOTA JIDOSHA KABUSHIKI KAISHA TOYOTA-SHI, AICHI-KEN 471-8571 (JP)**
- **Czech Technical University in Prague 16627 Praha 6 (CZ)**

(72) Inventors:
- **CHUMERIN, Nikolay 1140 BRUSSELS (BE)**

- **BAHNIK, Michal 166 27 PRAHA (CZ)**
- **FILYO, Dominik 166 27 PRAHA (CZ)**
- **PEKAREK, David 166 27 PRAHA (CZ)**
- **VLASIMSKY, Martin 166 27 PRAHA (CZ)**
- **CECH, Jan 166 27 PRAHA (CZ)**
- **HANIS, Tomas 166 27 PRAHA (CZ)**
- **Hromcik, Martin 166 27 PRAHA (CZ)**

(74) Representative: **Cabinet Beau de Loménie 158, rue de l'Université 75340 Paris Cedex 07 (FR)**

(54) **SURFACE RECOGNITION SYSTEM**

(57)      A surface recognition system (10) configured to assist a vehicle safety system (100) and comprising an optical instrument (20) configured to capture an image (22) surface, an electronic control system (40) configured to receive the image and to process the image, the electronic control system including a neural network (60), the neural network configured to receive the processed image (24), to determine semantic labels for corresponding pixels of the processed image, and to assign the semantic labels to the corresponding pixels of the processed image to formulate a semantic segmentation (26) of the processed image, and wherein the electronic control system is configured to communicate the semantic segmentation to a vehicle safety system of a vehicle capable of controlling a function of the vehicle, and communication of the semantic segmentation to the vehicle safety system adjusts control of the function of the vehicle.

FIG.1

EP 3 926 523 A1

## Description

### FIELD

The present disclosure relates generally to the field of vehicles. More specifically, the present disclosure relates to a surface recognition system configured to assist an anti-lock braking system a vehicle.

### BACKGROUND

Vehicle safety systems, such as anti-lock braking systems (ABS), Electronic Stabilization Programs (ESP), and Traction Control Systems (TCS), are included in vehicles in order to improve control and stability of vehicles on dangerous road conditions. As such, vehicle safety systems are typically required on all new vehicles.

Current vehicle safety systems typically rely on pure feedback schemes, wherein corrective actions and/or maneuvers are executed by the vehicle safety systems as a response to measured motions of a vehicle, and the road conditions are then only implicitly estimated from events such as a locked wheel and/or slippage of the vehicle. In particular, an anti-lock braking system response is based on reactions of a vehicle to excessive braking input solely, without employing any a priori information with respect to the road conditions. In current vehicle safety systems, particularly anti-lock braking systems, surface friction (and thus maximum braking or acceleration force) is estimated in an iterative manner in a closed loop to prevent locking of the wheels and/or losing traction. This approach is both slow and suboptimal, especially in road conditions including heterogeneous surfaces composed of segments with dramatically varying friction coefficients, such as dry tarmac with patches of ice, wetness, dirt, and/or stones.

Experienced human drivers typically consider the road conditions in front of the vehicle, such as whether the road is, or seems to be, wet, icy, and/or otherwise unstable and adjust driving actions accordingly. Implementing a priori information regarding road conditions ahead of the vehicle to improve estimations used to set parameters in vehicle safety systems has the potential to significantly increase safety in a vehicle in critical accident-threatening situations.

It is desirable to provide an improved system for assisting a vehicle safety system which is capable of predicting friction properties of a surface in front of a vehicle as the vehicle approaches the surface, in order to adjust parameters and/or operation of the vehicle safety system accordingly in advance of the surface, to solve one or more of the problems described above.

### SUMMARY

According to aspects of the present disclosure, surface recognition system is configured to assist a vehicle safety system and comprises an optical instrument configured to capture an image of a surface, an electronic control system configured to receive the image and to process the image, the electronic control system including a neural network, the neural network configured to receive the processed image, to determine semantic labels for corresponding pixels of the processed image, and to assign the semantic labels to the corresponding pixels of the processed image to formulate a semantic segmentation of the processed image, and wherein the electronic control system is configured to communicate the semantic segmentation to a vehicle safety system of a vehicle capable of controlling one or more function of the vehicle, and communication of the semantic segmentation to the vehicle safety system adjusts control of the one or more function of the vehicle.

According to aspects of the disclosure, the optical instrument comprises a digital camera configured to mount to a vehicle.

According to aspects of the disclosure, the optical instrument is configured to capture an image of a surface in front of a vehicle to improve operation of a vehicle safety system of the vehicle.

According to aspects of the disclosure, each semantic label correlates to a surface type.

According to aspects of the disclosure, the surface types may be comprised of an asphalt-type surface, gravel-type surface, and grass-type surface.

According to aspects of the disclosure, processing the image by the electronic control system may comprise orthographic rectification of the image.

According to aspects of the disclosure, the semantic segmentation is projected onto the image by the electronic control system.

According to aspects of the disclosure, the semantic segmentation is configured to set parameters of an algorithm configured to control operation of a vehicle safety system.

According to aspects of the disclosure, the neural network may be a convolutional neural network.

According to aspects of the disclosure, a driver assistance system comprises a surface recognition system according to any aspect described herein, a vehicle safety system of a vehicle configured to communicate with the electronic control system of the surface recognition system and to operate according to an algorithm to control one or more function of the vehicle, and wherein parameters of the algorithm of the vehicle safety system are set in response to the semantic segmentation formulated by the electronic control system.

According to aspects of the disclosure, the vehicle safety system may be an anti-lock braking system.

According to aspects of the disclosure, the semantic segmentation provides a locking brake torque value estimate which is applied to the algorithm of the vehicle safety system.

According to aspects of the disclosure, a method of assisting a driver of a vehicle comprises capturing an image of a surface, processing the image, determining semantic labels corresponding to pixels of the processed image, assigning the semantic labels to the corresponding pixels of the processed image to formulate a semantic segmentation of the processed image, and communicating the semantic segmentation to a vehicle safety system.

According to aspects of the disclosure, communicating the semantic segmentation includes applying an input value predicted by a neural network to an algorithm configured to control operation of the vehicle safety system.

According to aspects of the disclosure, applying the input value to the algorithm of the vehicle safety system adjusts control of one or more function of a vehicle by the vehicle safety system.

In the manner described and according to aspects illustrated herein, the surface recognition system, the driver assistance system, and the method of assisting a driver are configured to predict friction properties of a surface in front of a vehicle as the vehicle approaches the surface, in order to adjust parameters and/or operation of a vehicle safety system accordingly in advance of the surface. As such, the surface recognition system, the driver assistance system, and the method of assisting a driver allow for faster adaptation of a vehicle safety system to road conditions, which leads to improved control over functions and actions such as vehicle braking (e.g., shorter braking distance while braking) or enhanced obstacle avoidance while performing an emergency manoeuvre (e.g., braking and steering).

## BRIEF DESCRIPTION OF THE DRAWINGS

Aspects of an embodiment will be described in reference to the drawings, where like numerals reflect like elements:

Figure 1 is a schematic view of a surface recognition system (hereafter, "the system") configured to assist an anti-lock braking system a vehicle according to aspects of the disclosure;

Figure 2 is a photographic image depicting surface types which may be recognized by the system of Figure 1;

Figure 3A is a photographic image depicting an image captured by an optical instrument of the system of Figure 1;

Figure 3B is a photographic image depicting an image which has been processed by an electronic control system of the system of Figure 1;

Figure 3C is a semantic segmentation of an image which has been processed by the electronic control system of the system of Figure 1;

Figure 3D is a photographic image depicting an image captured by the optical instrument of the system of Figure 1, with a semantic segmentation projected onto the image;

Figure 4 is a graphical representation of a longitudinal slip curve corresponding to aspects of the disclosure;

Figure 5 is a schematic view of a single-track model according to aspects of the disclosure;

Figure 6A is a graphical representation of deceleration of a vehicle including use of the system of Figure 1 and deceleration of a vehicle without use of the system of Figure 1;

Figure 6B is a graphical representation of velocity of a vehicle including use of the system of Figure 1 and velocity of a vehicle without use of the system of Figure 1;

Figure 6C is a graphical representation of braking distance of a vehicle including use of the system of Figure 1 and braking distance of a vehicle without use of the system of Figure 1;

Figure 6D is a graphical representation of a difference in braking distance of a vehicle including use of the system of Figure 1 and a vehicle without use of the system of Figure 1;

Figure 7A is a graphical representation of front wheel angular speed of a vehicle including use of the system of Figure 1 and front wheel angular speed of a vehicle without use of the system of Figure 1;

Figure 7B is a graphical representation of front wheel braking torque of a vehicle including use of the system of Figure 1 and front wheel braking torque of a vehicle without use of the system of Figure 1;

Figure 7C is a graphical representation of rear wheel angular speed of a vehicle including use of the system of Figure 1 and rear wheel angular speed of a vehicle without use of the system of Figure 1; and

Figure 7D is a graphical representation of rear wheel braking torque of a vehicle including use of the system of Figure 1 and rear wheel braking torque of a vehicle without use of the system of Figure 1.

## DETAILED DESCRIPTION

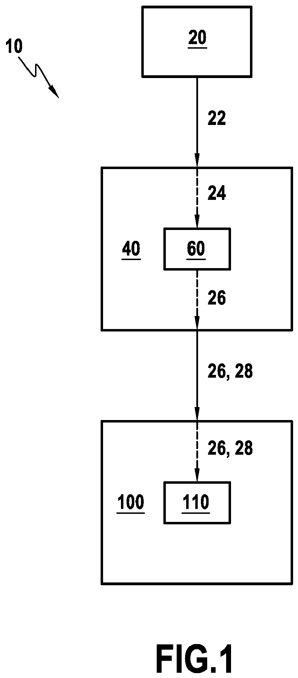

An embodiment of a surface recognition system (hereafter, "the system") configured to assist a vehicle safety system 100 according to aspects of the disclosure will now be described with reference to Figures 1-7D, wherein like numerals represent like parts, and will generally be referred to by the reference numeral 10. Although the system 10 is described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

Various materials, methods of construction and methods of fastening will be discussed in the context of the disclosed embodiment(s). Those skilled in the art will recognize known substitutes for the materials, construction methods, and fastening methods, all of which are contemplated as compatible with the disclosed embodiment(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present disclosure.

The system 10 is configured for use on a vehicle. In the disclosed embodiment, it is contemplated that the vehicle is configured to be driven upon a surface and includes displacement members, such as wheels, which are in contact with the surface. Additionally, it is contemplated that the term "surface" as used herein may be understood to mean any surface in which a vehicle is capable of being driven upon, such as a paved road surface, an unpaved road surface, and/or an unpaved off-road surface. As such, the term "surface" may also be referred to as a driving surface, a road surface, and/or an off-road surface. As shown in Figure 1, the system 10 is configured to assist a vehicle safety system 100 of a vehicle. The system 10 is capable of automatically assessing road conditions in front of a vehicle. More specifically, the system 10 is configured to recognize and/or predict friction and/or adhesion properties of surfaces in front of a vehicle as the vehicle approaches the surfaces. It is contemplated that reference to a "front" of a vehicle as used herein may be understood to mean a surface ahead of the vehicle when the vehicle is moving in a forward direction. The system 10 operates in real-time based upon visual recognition of the surfaces in front of the vehicle. As such, the system 10 includes an optical instrument 20, an electronic control system (ECS) 40, and a neural network 60. Additionally or alternatively, the ECS 40 may be referred to and/or described as an "electronic control unit (ECU)" herein. By applying information procured by the optical instrument 20, the ECS 40, and the neural network 60 to the vehicle safety system 100, the system 10 is capable of improving performance of the vehicle safety system 100, and thus improving control, stabilization, and/or maneuverability of the vehicle on a potentially dangerous road condition.

As illustrated in Figures 1-3A, the optical instrument 20 is configured to capture an image (also referred to as "the input image" herein) 22 of a surface. Additionally or alternatively, the optical instrument 20 may be capable of capturing an image 22 of a plurality of surfaces; however, the plurality of surfaces will be referred to herein as "the surface." Additionally or alternatively, the optical instrument 20 may be capable of capturing a plurality of images 22 of the surface; however, the plurality of images 22 will be referred to herein as "the image 22." Additionally or alternatively, the system 10 may include a plurality of optical instruments 20 configured to capture the image 22. Additionally, the optical instrument 20 is configured to capture the image 22 of the surface in front of a vehicle. The image 22 captured by the optical instrument 20, and thus the surface captured in the image 22, may be referred to as a region of interest (ROI) in front of the vehicle which is observable by the optical instrument 20. In the disclosed embodiment, the ROI may be a rectangular area in front of the vehicle. Additionally or alternatively, the ROI may be a segment of a disc-shaped area in front of the vehicle. It is contemplated that the ROI in front of the vehicle may depend upon a position and orientation of the optical instrument 20. The ROI in front of the vehicle may be described with respect to an optical axis of the optical instrument 20. The ROI in front of the vehicle may be centered upon the optical axis of the optical instrument 20. In the disclosed embodiment, the ROI in front of the vehicle may extend laterally, with respect to the optical axis of the optical instrument 20, within a range of 10 meters to 40 meters, but may preferably extend 25 meters laterally. In the disclosed embodiment, the ROI in front of the vehicle may extend longitudinally, with respect to the optical axis of the optical instrument 20, from a position at 1 meter in front of the vehicle to a position at 60 meters in front of the vehicle. It is contemplated that the ROI in front of the vehicle may extend longitudinally to a position at beyond 60 meters, depending on the capability and/or position of the optical instrument 20. In the disclosed embodiment, the optical instrument 20 is a digital camera. As such, the optical instrument 20 is capable of acquiring digital data providing appearance (color, e.g. RGB) information of the scene. It is contemplated that the optical instrument 20 may be mounted to the vehicle.

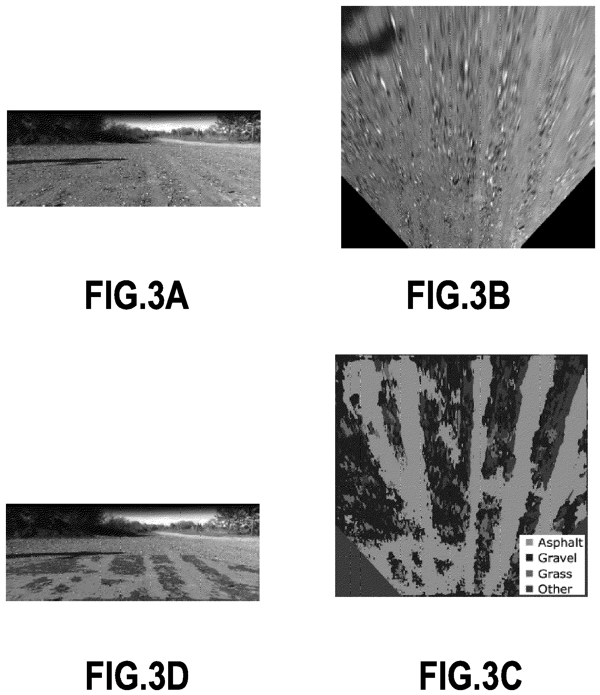

Referring to Figure 1, the ECS 40 is configured to receive the input image 22 from the optical instrument 20. The ECS 40 is then configured to process the image 22 received from the optical instrument 20. As such, it is contemplated that the ECS 40 may include an image processing unit. As shown in Figure 3B, an image processed by the ECS (also referred to as "the processed image" herein) 24 is geometrically normalized by orthographic rectification (also referred to as "bird's-eye view"). The image 22 is orthographically rectified so that the system 10 is not dependent on a particular viewpoint of optical instrument 20. As such, it may not be necessary to retrain the neural network 60 (discussed below) if the viewpoint of the optical instrument 20 changes. Additionally, orthographic rectification of the image 22 helps to facilitate generation of synthetic data and performance of data augmentation. The image 22 and/or the processed image 24 is also processed by warping by planar homography into a rectangular image which may be sized to a pixel size allowing for a resolution suitable for analysis by the neural network 60. It is contemplated that homography mapping for a new viewpoint of the optical instrument 20 and/or an additional optical instrument may be combined.

Referring to Figure 1, the ECS 40 includes the neural network 60. However, a person having ordinary skill in the art would appreciate that the neural network 60 may be included in an electronic device which is separate from the ECS 40 and capable of communication with the ECS 40. In the disclosed embodiment, the neural network 60 is a convolutional neural network suitable for analyzing visual imagery. Specifically, the neural network 60 is a VGG implementation of the U-NET, having an hourglass architecture with skip connection. The VGG implementation of the U-NET referred to is described in: O. Ronneberger, P. Fischer, and T. Brox, U-Net: Convolutional networks for biomedical image segmentation, in Medical Image Computing and Computer-Assisted Intervention, 2015, pp. 234-241, http://arxiv.org/abs/1505.04597. It is contemplated that the neural network 60 is trained to recognize surfaces captured in the image 22 by the optical instrument 20. The neural network 60 is trained on synthetic data with a cheap ground-truth annotation and fine-tuned on one or more examples of real data with manual annotation of the surface types. In the disclosed embodiment, the neural network 60 is trained on approximately 4,000 synthetic images, in addition to 80 real images captured by the optical instrument 20 with manual annotation. In experiments of the system 10, the synthetic image dataset is collected by stitching random patches of different surfaces, which were captured by a hand-held camera (approximately ground-parallel). The images are then randomly rotated and translated. To simulate a loss of resolution at distance, the images are warped by inverse homography (to the viewpoint of the camera) and back again. Resampling the image has the effect of loss of detail at distance. For real data, with manual annotation, a similar data augmentation, vertical flipping, in-plane rotation, and/or small translation is used. Additionally, the real images may have 10-times larger weight on a gradient. Additionally, the training converged after 40 epochs.

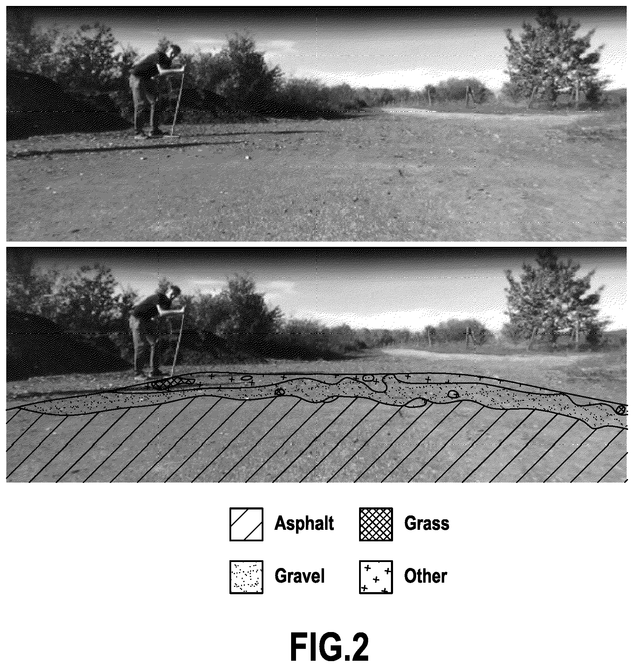

Referring to Figures 1-3C, the neural network 60 is configured to predict frictional properties of the surface captured in the processed image 24. As shown in Figure 3C, the neural network 60 is configured to formulate the processed image 24 as a semantic segmentation 26. Additionally or alternatively, the neural network 60 may be configured to formulate the input image 22 as a semantic segmentation 26. The semantic segmentation 26 of the processed image 24 corresponds to surface types which may be in front of the vehicle (see Figure 2). As such, the neural network 60 analyzes the processed image 26 to determine and/or predict one or more semantic labels corresponding to pixels of the processed image 24. Additionally or alternatively, the neural network 60 may be configured to analyze the input image 22 to determine and/or predict one or more semantic labels corresponding to pixels of the input image 22. Each semantic label corresponds to a surface type (see Figures 2 and 3C). In the disclosed embodiment, the surface types are an asphalt/tarmac-type surface, a gravel-type surface, a grass-type surface, and "other;" however, it is contemplated that additional or alternative surface types corresponding to a semantic label may be included in the system 10, such as a mud-type surface, sand-type surface, a metal-type surface, a wood-type surface, and/or any surface type that a vehicle may be driven upon. Once the neural network 60 determines the semantic labels, the neural network 60 assigns the semantic labels to the corresponding pixels of the processed image 24. Additionally or alternatively, the neural network 60 may be configured to assign the semantic labels to corresponding pixels of the input image 22. As shown in Figure 3C, the neural network 60 produces a semantic segmentation 26 of the processed image 24, based upon the semantic labels assigned to the pixels of the processed image 24. The semantic segmentation 26 of the processed image 24 may be color-coded, corresponding to different surface types predicted by the neural network 60. As shown by Figure 3D, the semantic segmentation 26 is then projected and/or back-projected onto the input image 22 by the ECS 40. The semantic segmentation 26 and/or the semantic segmentation 26 projected and/or back-projected onto the input image 22 initially received by the ECS 40 from the optical instrument 20 may be referred to as an output image 28 of the ECS 40.

Referring to Figure 1, the ECS 40 is configured to communicate the output image 28 to the vehicle safety system 100. Additionally or alternatively, the ECS 40 is configured to communicate the semantic segmentation 26 to the vehicle safety system 100. As such, it is contemplated that the ECS 40 may include a communication unit. The semantic segmentation 26 is configured to set parameters (discussed below) of an algorithm 110 (see Table 1) of the vehicle safety system 100, which is configured to control the vehicle safety system 100. It is contemplated that the semantic segmentation 26 provided to the algorithm 110 is applied to the algorithm 110 as an input value. In this manner, the semantic segmentation 26, and thus the system 10, improves the performance of the vehicle safety system 100 by providing the vehicle safety system 100 with a prediction of frictional properties of one or more surfaces in front of a vehicle as the vehicle approaches the one or more surfaces.

In the disclosed embodiment, the vehicle safety system 100 is an anti-lock braking system (ABS), but will be referred to generally as "the vehicle safety system 100" herein. It is contemplated that the system 10 may be compatible with other vehicle safety systems, such as an Electronic Stabilization Program (ESP), a Traction Control System, or the like. The vehicle safety system 100 operates by preventing wheels of a vehicle from locking during a braking action, thereby maintaining tractive contact of the wheels with a surface. It is contemplated that the term "lock" as used herein may be understood as the wheel rapidly losing angular momentum and/or velocity. The vehicle safety system 100 is configured to operate according to the algorithm 110. As such, it may also be understood that the algorithm 110 is configured to control operation of the vehicle safety system 100. Additionally or alternatively, the vehicle safety system 100 may be described as having an algorithm 110. In the algorithm 110, absolute values of wheel slip ratio $\lambda$ and braking torques are assumed, as only a braking action is considered herein.

As shown in Figure 1 of the disclosed embodiment, the semantic segmentation 26 and/or the output image 28 is provided to the algorithm 110 by the system 10 to control operation and/or improve performance of the vehicle safety system 100. As such, it is contemplated that the semantic segmentation 26 and/or the output image 28 is used to generate an input value which is provided to the algorithm 110. Additionally or alternatively, the semantic segmentation 26 and/or the output image 28 may be provided by the ECS 40 in the form of an input value generated by the ECS 40. Additionally or alternatively, the vehicle safety system 100 may include a brake control unit. The brake control unit may be configured to receive the semantic segmentation 26 and/or the output image 28. The brake control unit may process the semantic segmentation 26 and/or the output image 28 to generate an input value based on the semantic segmentation 26 and/or the output image 28, which is used to set parameters of the algorithm 110 to generate a brake command. The semantic segmentation 26 and/or the input value provided to the algorithm 110 by the system 10 are in the form of an estimated value of locking brake torque $T_{locking}$. Additionally, the locking brake torque $T_{locking}$ value estimate is in the form of the *MaxBrakeTorque* and *BrakeTorqueInit* parameters (see Table 1). As such, it is contemplated that the system 10 is configured to set parameters of the algorithm 110 to enhance operation of the vehicle safety system 100.

The vehicle safety system 100 is configured to work in two cycles. In a first cycle, brake torque increases until a wheel is too loaded and the wheel starts to lock. In a second cycle, also referred to as a "release phase," brake torque is reduced and the wheel is relaxed. It is contemplated that the term "relaxed" as used herein may be understood to mean the wheel regains angular momentum. A braking torque rise is divided into two parts to reduce idle and/or low braking action time. The first part, a rapid phase, which is represented by a brake torque increment by parameter $r_1$, occurs until the predefined torque value is reached. In the disclosed embodiment, the predefined torque value is 80% of a locking brake torque $T_{locking}$. The second part, a slow phase, which is represented by a brake torque increment by

parameter $r_2$, follows to increase the braking action and time spent just below locking brake torque $T_{locking}$. A maximum braking torque achieved is detected and set as a new locking brake torque $T_{locking}$ for a next cycle. The wheel locking action, which triggers the release phase, is detected based on the value of a wheel slip-ratio $\lambda$ crossing a maximum locking value $\lambda_{max}$. The release phase is terminated once the wheel slip-ratio $\lambda$ drops below a minimum locking value $\lambda_{min}$. The locking brake torque $T_{locking}$ is reset to the value $k \cdot T_{locking}$ at the beginning of each release phase.

The values of parameters $r_1$, $r_2$, $k$, $\lambda_{max}$, and $\lambda_{min}$ used herein are 1/10, 1/100, 0, 0.21, and 0.15, respectively. It is contemplated that the algorithm 110 reads the values of the wheel slip ratio $\lambda$ (see Equation 3 of Table 2), *MaxBrakeTorque,* and *BrakeTorqueInit* in each of the first and second cycles.

**Table 1**

| Algorithm for Braking Action of a Vehicle Safety System |
|---|
| **while** Vehicle Not Stationary **do**<br>    Get $\lambda$, *MaxBrakeTorque,* and *BrakeTorqueInit*<br>    **if** *MaxBrakeTorque* value is changed **then**<br>        $T_{locking} \leftarrow$ *MaxBrakeTorque*<br>        CurrentBrakeTorque $\leftarrow$ *BrakeTorqueInit*<br>    **end if**<br>    **if** $\lambda < \lambda_{max}$ **then**<br>        **if** CurrentBrakeTorque $< 0.8 \cdot T_{locking}$ **then**<br>            CurrentBrakeTorque $\leftarrow$ CurrentBrakeTorque $+ r_1$<br>        **else**<br>            CurrentBrakeTorque $\leftarrow$ CurrentBrakeTorque $+ r_2$<br>        **end if**<br>    **else**<br>        $T_{locking} \leftarrow$ CurrentBrakeTorque<br>        CurrentBrakeTorque $\leftarrow k \cdot$ CurrentBrakeTorque<br>        **while** TRUE **do**<br>          Get $\lambda$<br>          **if** $\lambda < \lambda_{min}$ **then**<br>            **brake**<br>          **end if**<br>        **end while**<br>    **end if**<br>**end while** |

Referring to Table 1, for a standard vehicle safety system, without use of the system 10, both of *MaxBrakeTorque* = $T_{max}$ and *BrakeTorqueInit* = 0 are constant. For the vehicle safety system 100, with use of the system 10, an estimated value of the locking brake torque $T_{locking}$ is provided based on classification of a surface and/or formulation of the semantic segmentation 26 due to prediction of surface-types by the neural network 60. For the vehicle safety system 100, with use of the system 10, *MaxBrakeTorque* = $T_{cam}$ and *BrakeTorqueInit* = $T_{cam}$, and $T_{cam}$ is updated in an event-based manner, such as detection of a new surface.

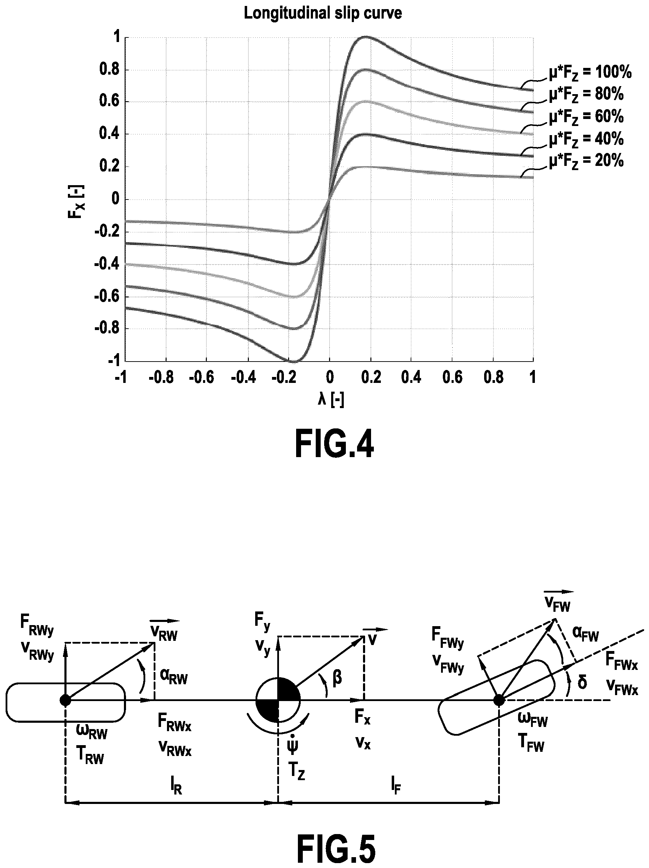

As shown in Figure 5, experiments of the system 10 were conducted on a nonlinear single-track model. The model state variables are $x = (|v|, \beta, \psi, \omega_{FW}, \omega_{RW})$, where $v[m/s]$ is a velocity of the vehicle at center of gravity (CG), $\beta[rad]$ is a side-slip angle at CG, $\psi[rad]$ is a cornering speed at CG, $\omega_{FW}[rad/s]$ is a rotational velocity of front wheels of the vehicle, and $\omega_{RW}[rad/s]$ is a rotational velocity of rear wheels of the vehicle. In experiments, the control inputs are torques applied on the front and rear wheels, respectively, $u = (T_{FW}, T_{RW})$. In the experiments, only longitudinal dynamics and control are considered. The dynamics of the single-track model are described by the differential equations shown in Table 2.

**Table 2**

| Equation 1 | $$\beta = -\psi + \frac{1}{m|v|}(\cos\beta\,F_y - \sin\beta\,F_x),$$ $$|v| = \frac{1}{m}(\sin\beta\,F_y + \cos\beta\,F_x),$$ $$\psi = \frac{1}{I_z}T_z$$ |
|---|---|
| Equation 2 | $F_x = F_{FWx} \cdot \cos\delta - F_{FWy} \cdot \sin\delta + F_{RWx},$ $F_y = F_{FWx} \cdot \sin\delta + F_{FWy} \cdot \cos\delta + F_{RWy},$ $T_z = I_f \cdot F_{FWx} \cdot \sin\delta + I_f \cdot F_{FWy} \cdot \cos\delta - I_r \cdot F_{RWy}$ |
| Equation 3 | $$\lambda_{FW} = \frac{\omega FW \cdot r - |v|}{\max(|\omega FW| \cdot r, |v|)}$$ |
| Equation 4 | $F_{FWx}(\lambda) = D\mu F_z \sin\left(C\arctan\left(B\lambda - E\left(B\lambda - \arctan\left(B\lambda\right)\right)\right)\right)$ |
| Equation 5 | $J_{FWy} \cdot \omega_{FW} = T_{FW} + F_{FWx}(\lambda) \cdot r + T_{drag}$ |
| Equation 6 | $$G(s) = \frac{1}{\tau_b s + 1} \cdot e^{-T_b \cdot s}$$ |

Referring to Equation 1 shown in Table 2, $F_x$ [$N$] is a force acting in a longitudinal direction at CG, $F_y$ [$N$] is a force acting in a lateral direction at CG, and $T_z$ [$Nm$] is the cornering torque at CG.

Referring to Equation 2 of Table 2, force vectors and the cornering torque at CG are results of tire forces generated by each wheel. The $F_F$ and $_{RWx}$ are longitudinal forces generated by front wheels and rear wheels, respectively. The $F_F$ and $_{RWy}$ are lateral forces generated by front wheels and rear wheels, respectively.

Referring to Equation 3 of Table 2, a wheel longitudinal traction force is governed by the wheel slip ratio A [-], which is defined by Equation 3 with respect to a front wheel. The $r$ [$m$] is the wheel radius.

Referring to Equation 4 of Table 2, a dependency of longitudinal forces generated by the wheels ($F_{FWx}$ and $F_{RWx}$) on the wheel slip ratio A is represented a longitudinal slip curve (see Figure 4). For experiments, a Pacejka magic formula, having parameters $B$, $C$, $D$, and $E$ is considered. The Pacejka magic formula referred to is described in: H. Pacejka, Tire and Vehicle Dynamics. Elsevier, 2005. Additionally, the dependency of longitudinal forces generated by the wheels is proportional to a wheel normal loading $F_Z$ [$N$] and a road coefficient of friction $\mu$ [-] (see Equation 4).

Referring to Equation 5 of Table 2, the equation is representative of the front wheel equation of motion (also referred to herein as "the wheel model"). The $J_{FWy}$ · [$kg \cdot m^2$] is a wheel moment of inertia along a wheel shift axis. $T_{FW}$ [$Nm$] is an input drive and/or brake torque applied on the wheel. The $F_{FWx}$ [$N$] is a longitudinal traction force generated by the wheel. The $T_{drag}$ [$Nm$] is representative of all combined drag effects. Parameter $r$ [$m$] corresponds to the wheel radius. Additionally, $F_{FWx}$ is defined by Equation 4.

Referring to Equation 6 of Table 2, the equation is representative of simplified dynamics of a braking system (also referred to herein as "the braking system model"), considered in the form of a first order system combined with a time delay represented by transfer function. The $\tau_b$ equals $T_b$, which equals 0.1 $s$. The braking system model represents physical phenomena related to a braking system actuation (such as hydraulic pressure generation and propagation), friction physics, and wheel relaxation dynamics. Additionally, the braking system model represents lags associated with acquisition and signal processing of measured variables (such as vehicle reference velocity and angular velocities of the wheels).

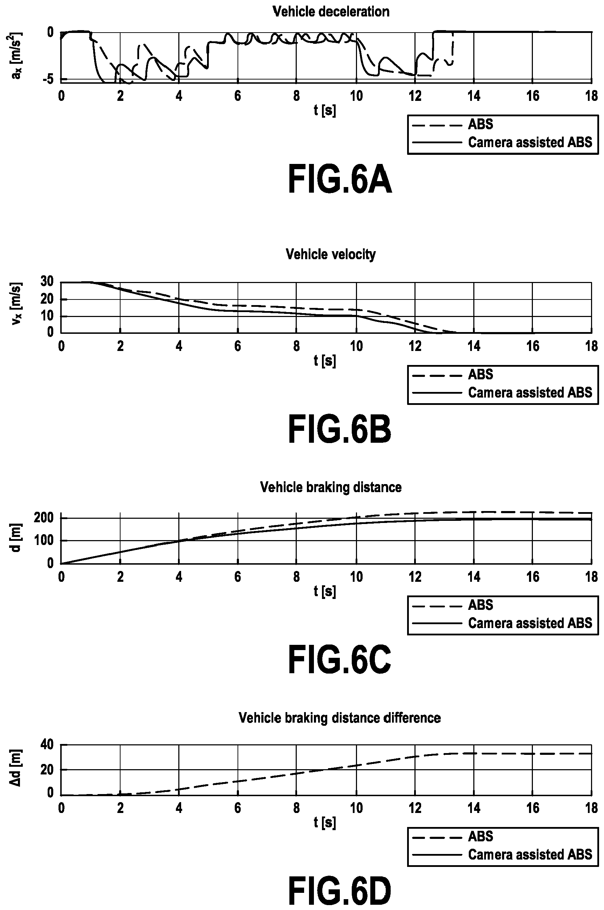

Referring to Figures 6A-7D, for experiments of the system 10, an emergency braking scenario is simulated and quantitatively assessed for a case of a problematic road segment. Parameters of models (the vehicle, the tires, and the braking system) are selected to represent a middle class sedan; however, the model of the vehicle is referred to herein as "the vehicle." A quantitative evaluation of the total braking distance reduction is conducted.

A verification scenario is designed in order to test braking capabilities of the system 10 and/or the algorithm 110 of the visually-assisted vehicle safety system 100. The verification scenario is a high-speed emergency braking (full-brake input) to standstill, with crossing of an icy patch. The braking maneuver starts at the first second of the simulation with an initial speed of the vehicle set to 30 $m/s$. The vehicle starts to brake on a surface with 50% of $\mu_{max}$,

representing wet tarmac. The icy patch appears in the simulation at a time of 4 $s$ to 10 $s$ and is simulated by drop of $\mu$ to 10% of $\mu_{max}$. Finally, the road condition is restored to 50% of $\mu_{max}$ at 10 $s$ until full-stop of the vehicle.

Referring to Figures 6A-6D, variables for state of the vehicle and control of the vehicle are shown. As shown in Figure 6A, deceleration of the vehicle includes faster braking action at simulation time 1 $s$ and 10 $s$ for the vehicle safety system 100 assisted by the system 10 (shown in solid line), as compared to a standard vehicle safety system without assistance by the system 10 (shown in dashed line). As shown in Figures 6D, the overall braking distance difference is reduced, reaching 32.45 meters, which is approximately 14.4% of total braking distance.

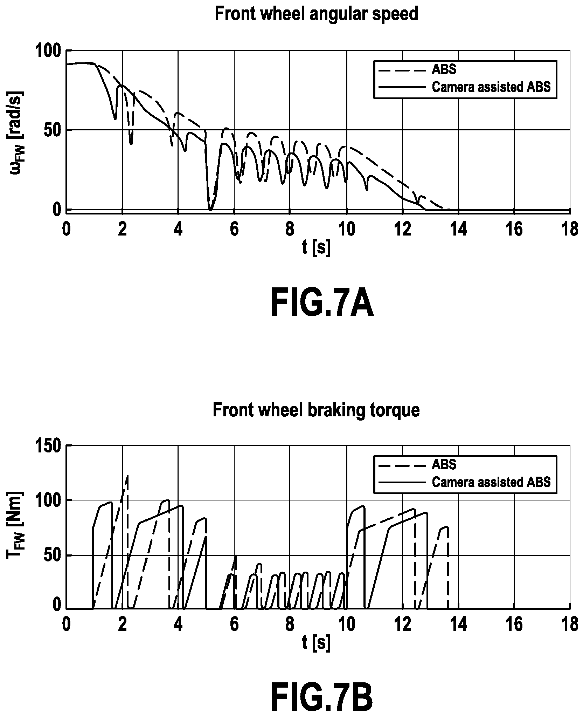

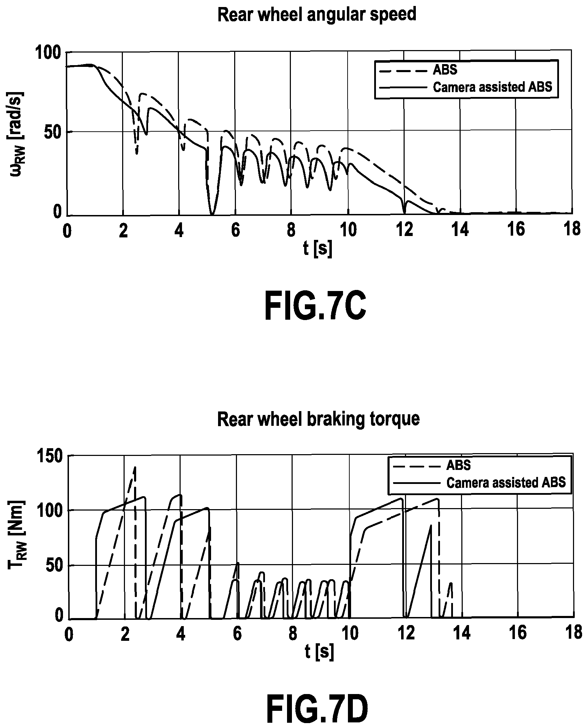

Referring to Figures 7A-7D, front wheel (see Figures 7A-7B) and rear wheel (see Figures 7C-7D) variables are shown. The reduction in braking distance is achieved due to prediction of surfaces and/or input values provided by the system 10 to the vehicle safety system 100. Particularly, the reduction in braking distance is due to the system 10 providing the locking brake torque $T_{locking}$ estimate to the algorithm 110 of the vehicle safety system 100. Additionally, variance of deceleration is reduced, after a surface condition change, with use of the system 10 to assist the vehicle safety system 100. The reduction in braking distance and reduction in variance of deceleration result from a significantly reduced surface identification phase of the algorithm 110 of the vehicle safety system 100 assisted by the system 10, as compared to a standard vehicle safety system without assistance by the system 10. Referring to Figures 7B and 7D, the identification phase of the locking brake torque $T_{locking}$ value is shown. The vehicle safety system 100 assisted by the system 10, with the locking brake torque value $T_{locking}$ parameter set accordingly based upon prediction of frictional properties of surfaces, includes a significantly shorter identification phase compared to a standard vehicle safety system without the system 10, with locking brake torque $T_{locking}$ initialized with maximum braking torque.

The identification phase associated with a standard vehicle safety system without the system 10 includes two unfavorable impacts on a braking action. The first unfavorable impact on braking action is that there is a slower start to the braking action. In contrast, the vehicle safety system 100 assisted by the system 10 reaches maximum deceleration in 500 $ms$ (see Figure 6A, at simulation time 1 $s$ to 1.5 $s$ and 10 $s$ to 10.5 $s$). The same effect is shown from braking torque acting on a wheel (see Figures 7B and 7D, at simulation time 1 $s$ to 1.5 sand 10 $s$ to 10.5 $s$). The second unfavorable effect is a higher variance of vehicle deceleration (see Figure 6A, at simulation time 2 $s$ to 5 $s$) and maximum value of braking torque (see Figures 7B and 7D), at simulation time 1 $s$ to 5 $s$ and, right after a change in condition of a surface, at 5 $s$ to 8 $s$). The identification process slows convergence for a standard vehicle safety system (see Figures 7B and 7D; at simulation time 5 $s$ to 8 $s$ right after a change in the surface condition).

The system was also demonstrated with a locking brake torque $T_{locking}$ value estimate deliberately corrupted with an error of 10% (and with an identification process of a standard vehicle safety system without the system 10 running in the background). Even with such imperfect a-priori information, essential reduction of the identification phase is achieved (see the bottom plot of Figures 6-7; at simulation time 1 sand 10 $s$.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

**Claims**

1. A surface recognition system (10) configured to assist a vehicle safety system (100), the surface recognition system comprising:

   an optical instrument (20) configured to capture an image (22) of a surface;
   an electronic control system (40) configured to receive the image and to process the image, the electronic control system including a neural network (60), the neural network configured to receive the processed image (24), to determine semantic labels for corresponding pixels of the processed image, and to assign the semantic labels to the corresponding pixels of the processed image to formulate a semantic segmentation (26) of the processed image; and
   wherein, the electronic control system is configured to communicate the semantic segmentation to a vehicle safety system of a vehicle capable of controlling one or more function of the vehicle, and communication of the semantic segmentation to the vehicle safety system adjusts control of the one or more function of the vehicle.

2. The surface recognition system (10) of claim 1, wherein the optical instrument (20) comprises a digital camera configured to mount to a vehicle.

3. The surface recognition system (10) of any of claims 1-2, wherein the optical instrument (20) is configured to capture an image (22) of a surface in front of a vehicle to improve operation of a vehicle safety system (100) of the vehicle.

4. The surface recognition system (10) of any of claims 1-3, wherein each semantic label correlates to a surface type.

5. The surface recognition system (10) of claim 4, wherein the surface types are comprised of an asphalt-type surface, a gravel-type surface, and a grass-type.

6. The surface recognition system (10) of any of claims 1-5, wherein processing the image (22) by the electronic control system (40) comprises orthographic rectification of the image.

7. The surface recognition system (10) of any of claims 1-6, wherein the semantic segmentation (26) is projected onto the image (22) by the electronic control system (40).

8. The surface recognition system (10) of any of claims 1-7, wherein the semantic segmentation (26) is configured to set parameters of an algorithm (110) configured to control operation of a vehicle safety system (100).

9. The surface recognition system (10) of any of claims 1-8, wherein the neural network (60) is a convolutional neural network.

10. A driver assistance system comprising:

    a surface recognition system (10) according to any of claims 1-9;
    a vehicle safety system (100) configured to communicate with the electronic control system (40) of the surface recognition system and to operate according to an algorithm (110) to control one or more function of a vehicle; and
    wherein, parameters of the algorithm of the vehicle safety system are set in response to the semantic segmentation (26) formulated by the electronic control system.

11. The driver assistance system of claim 10, wherein the vehicle safety system (100) is an anti-lock braking system.

12. The driver assistance system of any of claims 10-11, wherein the semantic segmentation (28) provides a locking brake torque value estimate which is applied to the algorithm (110) of the vehicle safety system (100).

13. A method of assisting a driver of a vehicle, the method comprising:

    capturing an image (22) of a surface;
    processing the image;
    determining semantic labels corresponding to pixels of the processed image (24);
    assigning the semantic labels to the corresponding pixels of the processed image to formulate a semantic segmentation (26) of the processed image; and
    communicating the semantic segmentation to a vehicle safety system (100).

14. The method of claim 13, wherein communicating the semantic segmentation (26) includes applying an input value predicted by a neural network (60) to an algorithm (110) configured to control operation of the vehicle safety system (100).

15. The method of claim 14, wherein applying the input value to the algorithm (110) of the vehicle safety system (100) adjusts control of one or more functions of a vehicle by the vehicle safety system.

10

20

22

24

40 | 60

26

26, 28

26, 28

100 | 110

# FIG.1

| | Asphalt | | Grass |
| --- | --- | --- | --- |
| | Gravel | | Other |

**FIG.2**

FIG.3A

FIG.3B

FIG.3D

FIG.3C

**FIG.4**

**FIG.5**

**Vehicle deceleration**

**FIG.6A**

**Vehicle velocity**

**FIG.6B**

**Vehicle braking distance**

**FIG.6C**

**Vehicle braking distance difference**

**FIG.6D**

**Front wheel angular speed**

## FIG.7A

**Front wheel braking torque**

## FIG.7B

**Rear wheel angular speed**

FIG.7C

**Rear wheel braking torque**

FIG.7D

Europäisches
Patentamt

European
Patent Office

Office européen
des brevets

**EUROPEAN SEARCH REPORT**

Application Number

EP 20 18 1244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 564 849 A1 (VOLVO CAR CORP [SE]) 6 November 2019 (2019-11-06) * paragraph [0001] - paragraph [0003] * * paragraph [0005] - paragraph [0007] * * paragraph [0009] - paragraph [0010] * * paragraph [0013] * * paragraph [0017] * * paragraph [0020] * ----- | 1-15 | INV. G06K9/00 |
| X | EP 2 963 581 A1 (LG ELECTRONICS INC [KR]) 6 January 2016 (2016-01-06) * paragraph [0001] - paragraph [0002] * * paragraph [0005] - paragraph [0006] * * paragraph [0012] * * paragraph [0022] * * paragraph [0053] * * paragraph [0113] * * paragraph [0137] * * paragraph [0145] - paragraph [0149] * * paragraph [0152] * * paragraph [0154] * * paragraph [0197] - paragraph [0198] * ----- | 1-15 | |
| X | US 2019/187722 A1 (HU JUN [CN] ET AL) 20 June 2019 (2019-06-20) * paragraph [0003] * * paragraph [0006] * * paragraph [0008] - paragraph [0012] * * paragraph [0022] * * paragraph [0035] * * paragraph [0055] - paragraph [0069] * * paragraph [0119] - paragraph [0121] * ----- -/-- | 1-15 | TECHNICAL FIELDS SEARCHED (IPC) G06K |

The present search report has been drawn up for all claims

| Place of search | Date of completion of the search | Examiner |
|---|---|---|
| The Hague | 13 November 2020 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 18 1244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 574 511 A1 (HONDA RES INST EUROPE GMBH [DE]) 3 April 2013 (2013-04-03) <br> * paragraph [0001] * <br> * paragraph [0004] * <br> * paragraph [0015] * <br> * paragraph [0017] * <br> * paragraph [0020] * <br> * paragraph [0030] - paragraph [0035] * <br> * paragraph [0038] * <br> * paragraph [0045] * <br> * figure 3 * <br> * paragraph [0052] * <br> * paragraph [0054] * <br> * paragraph [0058] - paragraph [0059] * <br> ----- | 1-15 | |
| X | US 2016/379065 A1 (HARTMANN BERND [DE]) 29 December 2016 (2016-12-29) <br> * paragraph [0001] * <br> * paragraph [0009] - paragraph [0012] * <br> * paragraph [0016] - paragraph [0017] * <br> * paragraph [0020] * <br> * paragraph [0026] * <br> * paragraph [0035] * <br> ----- | 1-15 | |

**TECHNICAL FIELDS SEARCHED     (IPC)**

The present search report has been drawn up for all claims

| Place of search | Date of completion of the search | Examiner |
|---|---|---|
| The Hague | 13 November 2020 | de Castro Palomares |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
### ON EUROPEAN PATENT APPLICATION NO.

EP 20 18 1244

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2020

| Patent document cited in search report | | Publication date | Patent family member(s) | | Publication date |
|---|---|---|---|---|---|
| EP 3564849 | A1 | 06-11-2019 | CN | 110458793 A | 15-11-2019 |
| | | | EP | 3564849 A1 | 06-11-2019 |
| | | | US | 2019340445 A1 | 07-11-2019 |
| | | | US | 2020285867 A1 | 10-09-2020 |
| EP 2963581 | A1 | 06-01-2016 | CN | 105270263 A | 27-01-2016 |
| | | | EP | 2963581 A1 | 06-01-2016 |
| | | | KR | 20160004118 A | 12-01-2016 |
| | | | US | 2016001780 A1 | 07-01-2016 |
| US 2019187722 | A1 | 20-06-2019 | CN | 107977641 A | 01-05-2018 |
| | | | DE | 102018109965 A1 | 19-06-2019 |
| | | | JP | 6615933 B2 | 04-12-2019 |
| | | | JP | 2019106159 A | 27-06-2019 |
| | | | US | 2019187722 A1 | 20-06-2019 |
| EP 2574511 | A1 | 03-04-2013 | EP | 2574511 A1 | 03-04-2013 |
| | | | JP | 5571125 B2 | 13-08-2014 |
| | | | JP | 2013079937 A | 02-05-2013 |
| | | | US | 2013085642 A1 | 04-04-2013 |
| US 2016379065 | A1 | 29-12-2016 | DE | 102013223367 A1 | 21-05-2015 |
| | | | DE | 112014002376 A5 | 31-03-2016 |
| | | | EP | 3069296 A1 | 21-09-2016 |
| | | | JP | 2017503715 A | 02-02-2017 |
| | | | US | 2016379065 A1 | 29-12-2016 |
| | | | WO | 2015070861 A1 | 21-05-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **O. RONNEBERGER ; P. FISCHER ; T. BROX.** U-Net: Convolutional networks for biomedical image segmentation. *Medical Image Computing and Computer-Assisted Intervention,* 2015, 234-241, http://arxiv.org/abs/1505.04597

- **H. PACEJKA.** Tire and Vehicle Dynamics. Elsevier, 2005